(19) **Europäisches Patentamt**

**European Patent Office**

**Office européen des brevets**

(11) Veröffentlichungsnummer : **0 204 983**
**B1**

(12) **EUROPÄISCHE PATENTSCHRIFT**

(45) Veröffentlichungstag der Patentschrift :
09.11.88

(21) Anmeldenummer : **86106500.1**

(22) Anmeldetag : **13.05.86**

(51) Int. Cl.⁴ : **F 16 D 65/24, B 60 T 17/08**

(54) **Bremszylinder für Keilspreizbremsen.**

(30) Priorität : **14.06.85 DE 3521319**

(43) Veröffentlichungstag der Anmeldung :
**17.12.86 Patentblatt 86/51**

(45) Bekanntmachung des Hinweises auf die Patenterteilung : **09.11.88 Patentblatt 88/45**

(84) Benannte Vertragsstaaten :
**DE FR GB IT SE**

(56) Entgegenhaltungen :
**FR-A- 2 544 431**
**GB-A- 2 128 255**

(73) Patentinhaber : **ROBERT BOSCH GMBH**
**Postfach 50**
**D-7000 Stuttgart 1 (DE)**

(72) Erfinder : **Beck, Siegfried**
**Stöfflerweg 8**
**D-7000 Stuttgart 80 (DE)**
Erfinder : **Pressmar, Manfred**
**Hornbergerstrasse 176**
**D-7000 Stuttgart 1 (DE)**
Erfinder : **Rönnefarth, Klaus**
**Hattenbühl 33**
**D-7000 Stuttgart 30 (DE)**
Erfinder : **Siebold, Manfred**
**Amsterdamer Strasse 6**
**D-7030 Böblingen (DE)**

Jouve, 18, rue St-Denis, 75001 Paris, France

## Beschreibung

Die Erfindung bezieht sich auf einen Bremszylinder für Keilspreizbremsen nach der Gattung des Hauptanspruchs. Ein derartiger Bremszylinder ist bekannt (FR-A-2 544 431).

Bei dieser bekannten Bauart sind in dem Führungsrohr ein Führungsbereich und zwei Dichtringe vorgesehen, die zwischen sich eine Zwischenkammer einschließen. Dabei ist ein Sekundärdichtring näher an dem Führungsbereich A angeordnet und fest in das Traggehäuse eingebaut. Ein Primärdichtring ermöglicht eine Vorabstreifung von groben Schmutzteilen und Verunreinigen, die sich an der Kolbenstange festgesetzt haben, und der Sekundärdichtring gewährleistet sowohl die restliche Säuberung als auch die völlige Abdichtung sowohl im statischen als auch im dynamischen Zustand. Mit Hilfe der beiden Dichtringe ist der aus dem Sekundärdichtring austretende Kolbenstangenteil sauber und trocken, so daß Verunreinigungen und Wasser vom Inneren des Führungsrohres ferngehalten werden. In der Praxis hat sich aber gezeigt, daß die bekannte Dichtungsanordnung nicht immer zuverlässig arbeitet.

Der Erfindung liegt die Aufgabe zugrunde, diesen Nachteil zu vermeiden und eine Dichtungsanordnung zu schaffen, die eine exakte, enge Führung gewährleistet und die außerdem eine gute Abstreifwirkung hat.

Diese Aufgabe wird gemäß der Erfindung bei einem gattungsgemäßen Bremszylinder durch die kennzeichnenden Merkmale des Patentanspruchs 1 gelöst.

Der relativ steife Primärdichtring ist verhältnismäßig weit von der Führungsstelle A der Kolbenstange entfernt und kann einer großen Pendelbewegung der Kolbenstange folgen und der fest eingespannte Sekundärdichtring liegt nahe an der Führungsstelle und wird deshalb radial nicht beansprucht. Die Dichtungsanordnung insgesamt hat weniger Reibung und erfordert nur eine geringe Rückstellkraft an der Kolbenstange, so daß die Rückholfeder nicht so stark sein muß.

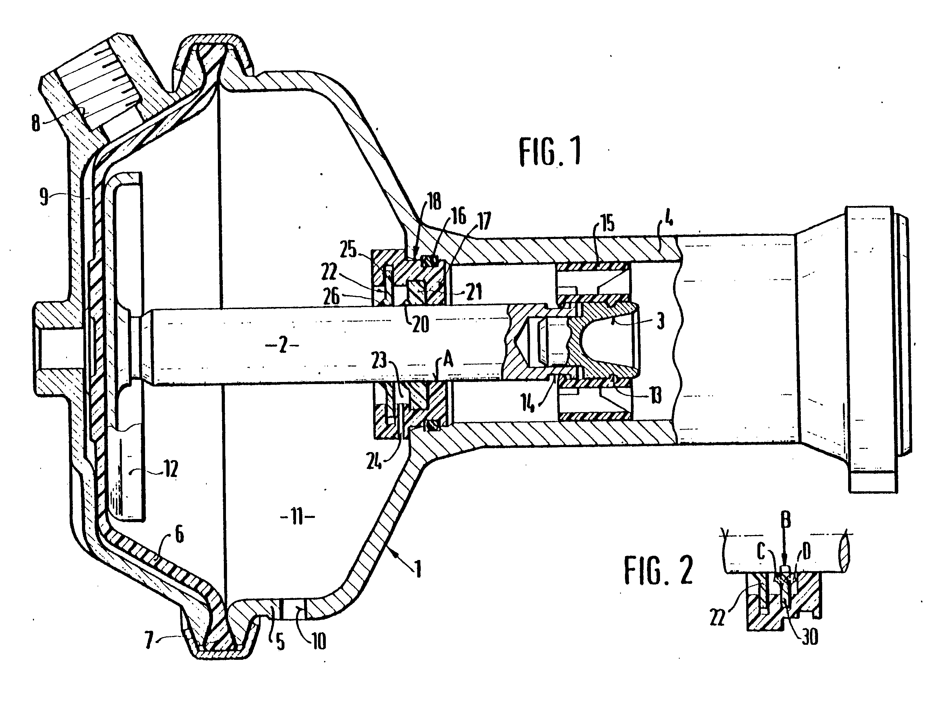

Zwei Ausführungsbeispiele der Erfindung sind in der Zeichnung dargestellt und in der nachfolgenden Beschreibung näher erläutert. Es zeigen : Figur 1 eine erste Ausführung der Dichtungsanordnung und Figur 2 eine Abwandlung der Bauart nach der Figur 1.

## Beschreibung des Ausführungsbeispieles

Ein Bremszylinder 1 ist zur Betätigung einer Keilspreizbremse bestimmt. Er hat zu diesem Zweck eine Kolbenstange 2, die an ihrem freien Ende mit einer Kalotte 3 zur Aufnahme einer nicht dargestellten Keilspreizeinrichtung versehen ist. Die Kolbenstange 2 wird von einem Führungsrohr 4 aufgenommen, das an ein Gehäuse 5 des Bremszylinders 1 angeformt ist. Das Bremszylinder-Gehäuse 5 besteht aus zwei Teilen, zwischen denen eine Membran 6 an ihrem Rand 7 eingespannt ist. Die Membran 6 ist das Arbeitsglied des Bremszylinders, sie trennt eine mit einem Leitungsanschluß 8 versehene Arbeitskammer 9 von einer, über einen Wanddurchbruch 10 nach außen verbundene Außenluft-Kammer 11. Die Kolbenstange 2 liegt an ihrem inneren Ende mit einem an sie angeschweißten Teller 12 an der Membran 6 an.

Das freie Ende der Kolbenstange 2 ist mit zwei Ringnuten 13 und 14 versehen, in die ein Kunststoffring 15 eingesprengt ist, der in das Führungsrohr 4 gleitbar eingesetzt ist. Am Übergang vom Führungsrohr 4 zum Bremszylinder-Gehäuse 5 ist eine Dichtungsanordnung mittels einer O-Ringdichtung 16 abgedichtet eingesetzt, die mit einem, durch die Seitenwand 17 eines Traggehäuses 18 gebildeten Führungsbereich A die Kolbenstange 2 führunggebend aufnimmt. Ein nahe an dem Führungbereich A angeordneter, in das Traggehäuse 18 fest eingesetzter Dichtring 21 hat eine weiche ringförmige Dichtlippe 20.

Wie die Figur 2 zeigt, ist es auch möglich, hier einen Dichtring 30 zu verwenden, der als flexible, glatte Ringscheibe ausgebildet ist und einen Innendurchmesser B hat, der kleiner ist als der Durchmesser der Kolbenstange 2. Das bewirkt, daß bei der Bewegung der Kolbenstange 2 der Dichtring 30 mit einem Innendurchmesser B in Bewegungsrichtung mitgenommen wird und Endstellungen einnehmen kann, die in der Zeichnung gestrichelt dargestellt sind und die Bezeichnungen C und D tragen. Es ist also festzuhalten, daß der Dichtring 30 an seinem Innendurchmesser B umklappt.

Eine dabei jeweils der Bewegungsrichtung abgekehrte scharfe Kante des Innendurchmessers B wirkt dann als Dichtkante. Dem Dichtring 21 bzw. 30 ist ein anderer Dichtring 22 beigeordnet. Beide Dichtringe 21 bzw. 30 und 22 schließen zwischen sich eine Atmungskammer 23 ein, die über Radialkanäle 24 an die Außenluft-Kammer 11 und damit an Außenluft angeschlossen ist.

Dieser andere Dichtring 22 ist radialbeweglich in das Traggehäuse 18 eingesetzt. Dazu hat er einen steifen Ringkörper 25, z. B. aus Kunststoff.

Innen im Ringkörper sitzt eine ringförmige Dichtlippe 26, die die Kolbenstange 2 umfaßt. Dieser letztgenannte Dichtring 22 ist gegenüber dem Bremszylinder 1 eine Primärdichtung, die beim Betätigen des Bremszylinders Schmutz und Staub von der Kolbenstange 2 auf dem verhältnismäßig langen Bereich zwischen dem Dichtring 22 und dem Teller 12 abstreift, und der andere Dichtring 21 bzw. 30 ist eine Sekundärdichtung, die nur noch den kleinen Kolbenstangenbereich zwischen den beiden Dichtringen 22 und 21 bzw. 30 sauber halten muß und eventuell in die Atmungskammer 23 eingedrungenes Kondenswasser oder dergleichen von der Kolbenstange 2 abstreifen braucht. Auf diese Weise bewirkt die Dichtungsanordnung insgesamt nur eine geringe Reibung, und sie weist gegegenüber der Bewegung der Kolbenstange 2 nur einen geringen Widerstand auf. Das gilt auch bezüglich des Dichtringes 30, weil seine Dichtlippe sich wie ein Wischblatt eines Scheibenwischers umstülpen, bzw. weil sie umklappen kann.

Aufgrund der besonderen Lagerung mit dem Führungsbereich A und den beiden Dichtstellen an den Dichtringen 21 bzw. 30 und 22, der relativ festen am Sekundärdichtring 21 bzw. 30 und der radial nachgiebigen am Primärdichtring 22, kann die Kolbenstange 2 Pendelbewegungen ausführen, ohne daß die Dichtringe 21 bzw. 30 und 22 beschädigt werden. Deshalb hat die erfindungsgemäße Dichtungsanordnung auch eine lange Lebensdauer.

**Patentansprüche**

1. Bremszylinder für Keilspreizbremsen, der einen Membranzylinder (1) mit anschließendem Führungsrohr (4) und eine im Führungsrohr längsbeweglich geführte Kolbenstange (2) sowie im Membranzylinder eine bewegliche Membran (6) aufweist, die gegen das ihr zugewandte Ende (12) der Kolbenstange drückt, wobei das Innere des Membranzylinders über mindestens eine Entlüftungsöffnung (10) nach außen entlüftet und vom Inneren des Führungsrohres mittels einer Dichtungsanordnung getrennt ist, die ein Traggehäuse (18) aufweist, das abgedichtet im Führungsrohr gehalten ist und das einen Führungsbereich (A) gegenüber der Kolbenstange (2) und zwei auf der Kolbenstange gleitende Dichtringe (21, 22) trägt, welche zwischen sich eine Zwischenkammer (23) einschließen, wobei der näher am Führungsbereich (A) angeordnete Sekundärdichtring (21 ; 30) fest in das Traggehäuse (18) eingebaut ist, dadurch gekennzeichnet, daß die Zwischenkammer als mit der Außenluft verbundene Atmungskammer (23) ausgebildet ist und daß der dem Membranzylinder (1) zugewandte Primärdichtring (22) mit einer zum Membranzylinder (1) gerichteten Dichtlippe (26) an der Kolbenstange (2) anliegt, welcher Primärdichtring (22) einen relativ steifen Ringkörper (25) aufweist und im Traggehäuse (18) radial beweglich angeordnet ist.

2. Bremszylinder nach Anspruch 1, dadurch gekennzeichnet, daß der Sekundärdichtring (21 bzw. 30) als Flüssigkeit-Abstreifring ausgebildet ist.

3. Bremszylinder nach Anspruch 1 oder 2, dadurch gekennzeichnet, daß der Sekundärdichtring (21) eine Dichtlippe (20) hat.

4. Bremszylinder nach Anspruch 1 oder 2, dadurch gekennzeichnet, daß der Sekundärdichtring (30) einen kleineren Durchmesser (B) als die Kolbenstange (2) hat, daß er ferner im Bereich des Durchmessers (B) zwei scharfe Ringkanten hat und wie ein Scheibenwischblatt umklappbar ist.

**Claims**

1. Brake cylinder for wedge-actuated brakes, which has a diaphragm cylinder (1), having an adjoining guide tube (4), and a piston rod (2), guided in a longitudinally moveable manner in the guide tube, and also, in the diaphragm cylinder, a moveable diaphragm (6) which presses against the end (12) of the piston rod facing it, the interior of the diaphragm cylinder being vented to the outside via at least one vent opening (10) and being separated from the interior of the guide tube by means of a sealing arrangement which has a supporting housing (18) which is held in a sealed manner in the guide tube and which has a guide area (A) relative to the piston rod (2) and two sealing rings (21, 22) which slide on the piston rod and enclose between them an intermediate chamber (23), the secondary sealing ring (21 ; 30) arranged closer to the guide area (A) being firmly fitted into the supporting housing (18), characterized in that the intermediate chamber is designed as a breathing chamber (23) connected to the outside air, and that a primary sealing ring (22) facing the diaphragm cylinder (1), with a sealing lip (26) directed towards the diaphragm cylinder (1), bears against the piston rod (2), which primary sealing ring (22) has a relatively rigid annular body (25) and is arranged in a radially moveable manner in the supporting housing (18).

2. Brake cylinder according to Claim 1, characterized in that the secondary sealing ring (21 or 30) is designed as a liquid wiper ring.

3. Brake cylinder according to Claim 1 or 2, characterized in that the secondary sealing ring (21) has a sealing lip (20).

4. Brake cylinder according to Claim 1 or 2, characterized in that the secondary sealing ring (30) has a smaller diameter (B) than the piston rod (2), that it also has two sharp annular edges in the area of the diameter (B) and can be folded back like a windscreen wiper blade.

**Revendications**

1. Cylindre de frein pour freins actionnés par cales qui comporte un cylindre à membrane (1) muni d'un cylindre de guidage (4) et une tige de piston (2) guidée dans un déplacement longitudinal dans le cylindre de guidage, ainsi qu'une membrane (6) mobile dans le cylindre à membrane qui appuie contre l'extrémité (12) de la tige de piston lui faisant face, où l'intérieur du cylindre à membrane est purgé vers l'extérieur par au moins un orifice de dégazage (10) et est séparé de l'intérieur du cylindre de guidage par un système d'étanchéité qui comporte un boîtier-support (18) qui est maintenu de façon étanche dans le cylindre de guidage et qui comporte une zone de guidage A contre la tige de piston (2) et porte deux bagues d'étanchéité (21, 22) glissant sur la tige de piston (2), qui déterminent entre elles une chambre intermédiaire (23) où se trouve introduite à poste fixe dans le boîtier-support une bague d'étanchéité secondaire (21, 30) au voisinage de la zone de guidage, caractérisé en ce que la chambre intermédiaire (23) est sous forme d'une chambre d'aspiration reliée à l'air extérieur et en ce que la bague d'étanchéité faisant face au cylindre à membrane est contiguë à une lèvre d'étanchéité (26) sur la tige de piston (2) au cylindre à membrane (1), cette bague d'étanchéité primaire (22) comportant un corps annulaire relativement rigide (25) et se trouvant disposée de façon à pouvoir se déplacer radialement dans le boîtier-support (18).

2. Cylindre de frein selon la revendication 1, caractérisé en ce que la bague d'étanchéité secondaire (21 ou 30) est sous forme d'une bague racleuse de liquide.

3. Cylindre de frein selon la revendication 1 ou la revendication 2, caractérisé en ce que la bague d'étanchéité secondaire (21) possède une lèvre d'étanchéité (20).

4. Cylindre de frein selon la revendication 1 ou la revendication 2, caractérisé en ce que la bague d'étanchéité secondaire (30) présente un diamètre plus petit que celui de la tige de piston (2), qu'en outre elle possède deux bordures circulaires aiguës dans la zone du diamètre B et peut se rabattre comme un balai d'essuie-glace.

FIG. 1

FIG. 2

0 204 983